Europäisches Patentamt

European Patent Office

Office européen des brevets

(11) Numéro de publication: **0 031 736**
**A1**

(12) **DEMANDE DE BREVET EUROPEEN**

(21) Numéro de dépôt: **80401585.7**

(22) Date de dépôt: **06.11.80**

(51) Int. Cl.³: **G 07 F 7/10,** G 06 F 15/30

---

(30) Priorité: **09.11.79 FR 7927673**

(43) Date de publication de la demande: **08.07.81**
**Bulletin 81/27**

(84) Etats contractants désignés: **AT BE CH DE GB IT LI LU NL SE**

(71) Demandeur: **Widmer, Michel Jean François Marie, 19 bis, Grande Rue, Egly F-91290 Arpagon (FR)**

(72) Inventeur: **Widmer, Michel Jean François Marie, 19 bis, Grande Rue, Egly F-91290 Arpagon (FR)**

(74) Mandataire: **Kessler, Jacques et al, CABINET KESSLER 14, rue de Londres, F-75441 Paris Cedex 09 (FR)**

---

(54) Dispositif informatique de saisie et traitement du relevé d'identité banquaire.

(57) Cet appareil piloté par microprocesseur assure:
– la vérification de l'identité bancaire de la carte de crédit ou du chèque présenté en paiement,
– le contrôle de la PROPRIÉTÉ du porteur,
– l'ÉDITION AUTOMATIQUE du titre de paiement,
– la mise à jour AUTOMATIQUE de la carte accréditive,
– le POST MARQUAGE AUTOMATIQUE des chèques.
Il permet en outre:
– la personnalisation IMMÉDIATE du BÉNÉFICIAIRE et du LIEU d'émission,
– la PROTECTION MÉCANIQUE du système de personnalisation.
L'appareil assure une PROTECTION INTÉGRALE contre l'emploi FRAUDULEUX des cartes de crédit ou chèques volés, ainsi que contre la FALSIFICATION ultérieure des chèques (lavage).
L'appareil est prévu pour fonctionner:
A) en poste autonome, associé ou non à un MODEM permettant son raccordement à un réseau téléphonique, il peut mémoriser les transactions associées aux RIB avant de les retransmettre,
B) en satellite d'une caisse enregistreuse ou d'un terminal point de vente.
Indépendamment du mode de fonctionnement, l'appareil est équipé pour RECEVOIR DIRECTEMENT:
– un crayon de lecture (code Barre ou optique),
– une ou deux mini-cassettes,
– un ou deux mini-disques souples,
– une imprimante de caisse (ticket + journal), avec logo et massicot automatiques.

# DISPOSITIF INFORMATIQUE DE SAISIE ET TRAITEMENT DU RELEVE D'IDENTITE BANCAIRE

1. La présenté invention concerne l'automatisation INTEGRALE de la SAISIE et du CONTROLE A PRIORI des transactions commerciales effectuées entre particuliers et commerçants de détails grandes surfaces, prestataires de services, au moyen de chèques bancaires ou de cartes bancaires de crédit.

2. Les appareils existants sur le marché mondial sont soit :

- des caisses enregistreuses comportant (pour les plus sophistiquées) un dispositif de LECTURE de carte de crédit uniquement,

- de simples appareils LECTEURS DE BADGES ou de cartes de crédit,

- des LECTEURS de chèques, le plus souvent utilisés APRES l'opération du post-marquage des chèques.

Il n'existe pas, actuellement, d'appareil permettant d'assurer de MANIERE COMPLETE, SURE et AUTOMATIQUE une transaction commerciale à l'aide d'un chèque ou d'une carte de crédit.

Il n'existe AUCUNE PROTECTION contre l'emploi frauduleux ou la contre façon des chèques.

3. Le système DISTRIB apporte une SOLUTION TOTALE à ces différents problèmes graves tout en améliorant considérablement la qualité et la rapidité des services.

En bref, DISTRIB apporte des résultats CONCRETS, IMMEDIATEMENT MESURABLES aux niveaux :

- de la SECURITE du CONTROLE A PRIORI des transactions et de la TRANSMISSION des transactions,

- de la SIMPLIFICATION des opérations et manipulations diverses consécutives à une transaction par chèque,

- de l'ECONOMIE (réduction des coûts administratifs de saisie, de reprise et de contrôle A POSTERIORI des transactions).

4. Le système DISTRIB, objet de l'invention, comporte :

1/ un dispositif électronique PROGRAMMABLE I qui permet :

a) le contrôle préalable du R.I.B. (Relevé d'Identité Bancaire) qui, comparé au N.I.P. (Numéro d'Identification Personnel, analogue aux cartes de crédit) indiqué par le porteur lui-même détécte la VRAISEMBLANCE du porteur du chèque.

En cas de discordance, après le 3ème essai, le chèque peut être :

0031736

- restitué en l'état au porteur,

- restitué IMPROPRE à l'USAGE (grillage des zones montants du chèque).

Dans les deux cas, la transaction est annulée.

b) l'édition automatique du titre de paiement avec saisie et édition automatique du NOM du bénéficiaire et du LIEU d'émission.

2/ Un dispositif électro-mécanique 2 de PERSONNALISATION de l'appareil pour ce qui concerne l'édition automatique du NOM du bénéficiaire et du lieu d'émission du chèque.

Le dispositif 2 est PROTEGE MECANIQUEMENT par un capot à serrure 3. La serrure pourra être de sûreté, à "pompe", ou à combinaison.

3/ Un MECANISME d'IMPRESSION SPECIFIQUE 4 utilisant une encre INDELEBILE; l'apposition de l'encre pourra se faire par PRESSION sur ruban (mécanisme à aiguilles, à billes, à roues ou secteurs) ou par transfert 5 (type OFFSET).

Un autre système d'impression électronique 6 utilisant le principe laser a été étudié.

4/ Un dispositif électronique programmable 7 qui permet :

a) le contrôle PREALABLE DU RIB et de la VRAISEMBLANCE du porteur d'une carte de crédit. En cas de discordance, après le 3ème essai ou de manque de provision, la carte pourra être

- restituée en l'état à son porteur,

- rendue IMPROPRE à l'usage. La carte devra alors être RE-INITIALISEE par la banque émettrice.

5/ Un dispositif électronique PROGRAMMABLE 8 de transfert du RIB, associé au montant de la transaction.

6/ Un dispositif électronique PROGRAMMABLE 9 de stockage interne et externe, des RIB associés aux transactions permettant un transfert différé.

7/ Un dispositif électronique et électro-mécanique IO programmable qui assure le POST MARQUAGE magnétique du chèque en même temps que l'édition des autres rubriques.

Ce dernier dispositif tout en assurant une PROTECTION SUPPLEMENTAIRE contre les falsifications SIMPLIFIE et rationalise le trajet actuel du chèque AVANT son encaissement.

5. Le système DISTRIB est utilisable DIRECTEMENT, en fonctionnement : local autonome, local connecté à un réseau téléphonique public ou privé, de satellite d'appareils existants types : caisses enregistreuses, terminaux "points de vente",
terminaux divers.

La clientèle "type" de cette invention peut se résumer ainsi :

a) commerce de détail : fonctionnement autonome ou connecté à
un réseau local, régional ou national.

b) grandes surfaces et chaînes de magasins : satellite de
caisses enregistreuses existantes,

c) prestataires de service :

- distribution automatique de titres de transport,
- hôtellerie, restauration,
- distribution de carburants,
- location de matériels, véhicules.....

4

REVENDICATIONS 0031736

1. Grâce à un micro processeur qui contrôle et pilote les dispositifs électroniques et électro-mécaniques qui composent le système, le système DISTRIB permet :

- d'assurer une PROTECTION TOTALE contre les falsifications de chèques et utilisations frauduleuses de chèques et cartes de crédit perdus ou volés,

- de SIMPLIFIER :

    . les transactions entre particuliers et commerçants prestataires de services,

    . les opèrations administratives et bancaires d'encaissement et de compensation.

2. Caractéristiques techniques.

Revendication I.

Dispositif de contrôle du RIB sur le chèque.

Ce dispositif inclut, au titre de la revendication I, 4 éléments énoncés et décrits ci-après.

Elément I.

Mécanisme d'entrainement commandé par un circuit opto-électronique contrôlé par le micro processeur ; ce mécanisme est commun aux revendications I, 4 et 7.

Elément 2.

Dispositif opto-électronique de sélection et de commande du mécanisme d'entrainement.

Elément 3.

Dispositif de décodage des caractères magnétiques CMC7 et interface de liaison programmable avec le microprocesseur.

Elément 4.

Algorithme de résolution de la procédure de contrôle et de traitement.

Elément I.

Caractérisé par DEUX chemins de documents spécialisés, un pour les chèques, un pour les cartes de crédit, assemblés tous sur un chassis commun (planche I/I7) et entrainés par un moteur et axe uniques. L'élément I assure :

a) la sélection automatique du type de document présenté. Le mécanisme se bloque automatiquement (arrêt du moteur) si 2 documents sont présentés en même temps.

b) le verrouillage automatique du chemin INUTILISE, interdisant ainsi l'introduction SUCCESSIVE de 2 documents différents.

Ce mécanisme est commandé par l'élément 2.

Elément 2.

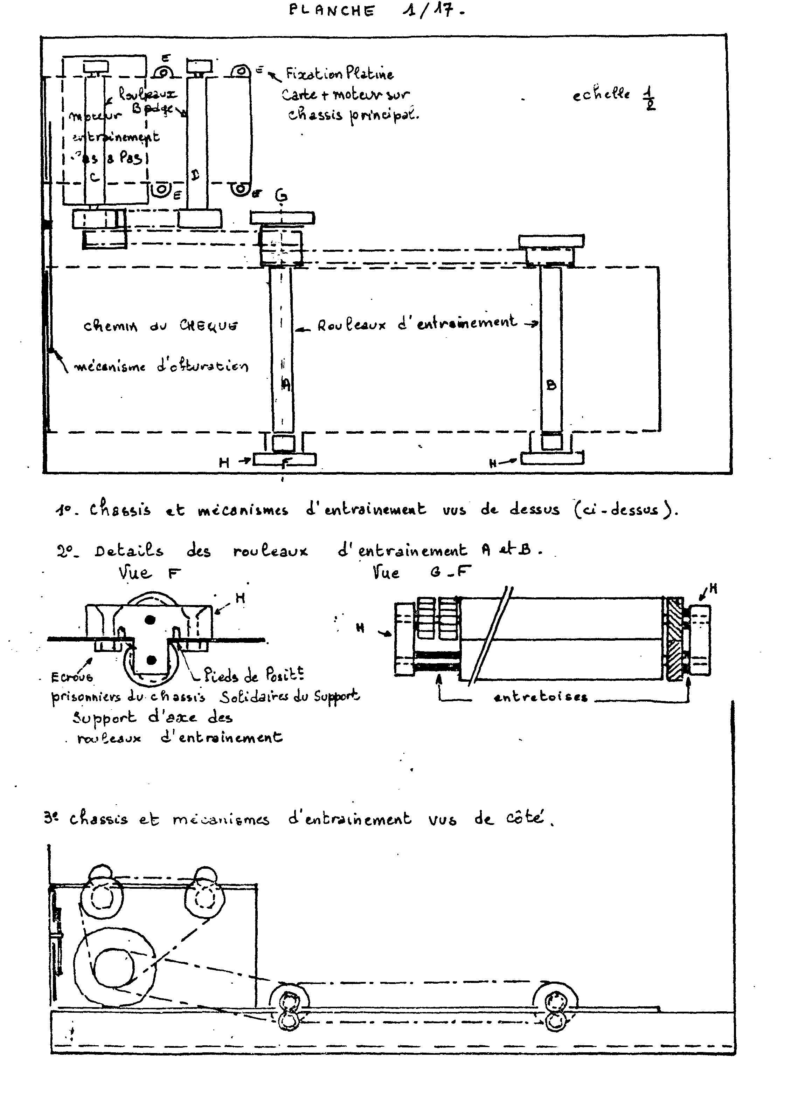

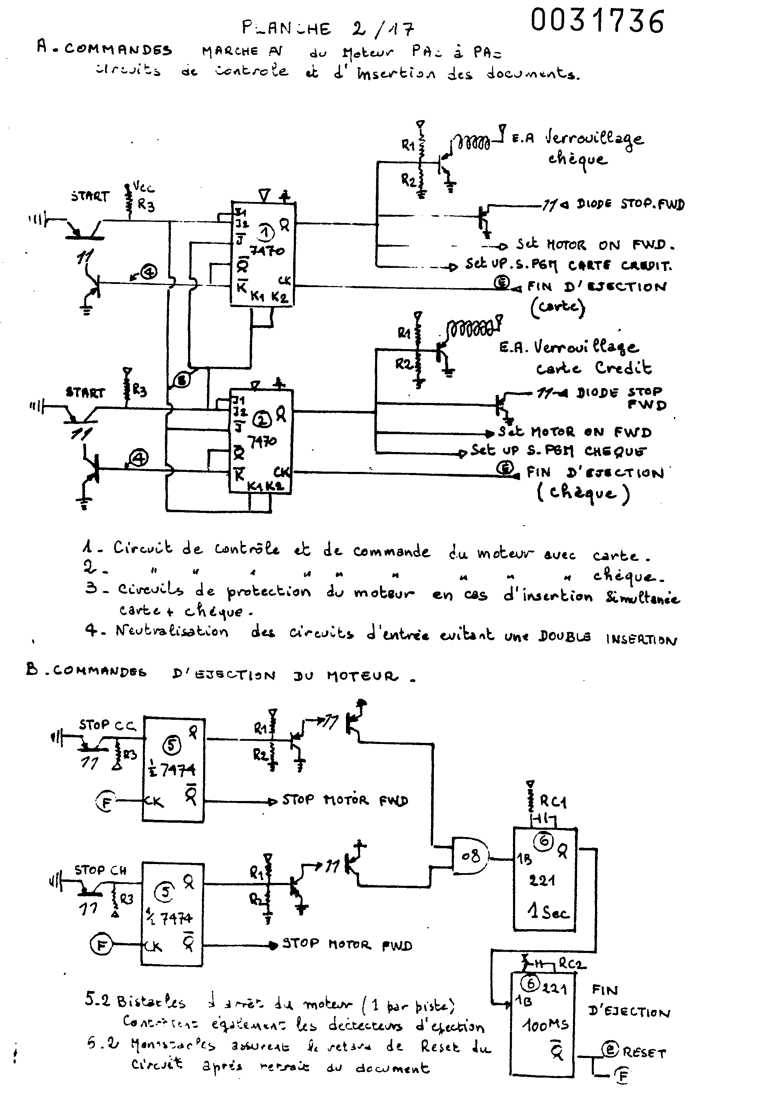

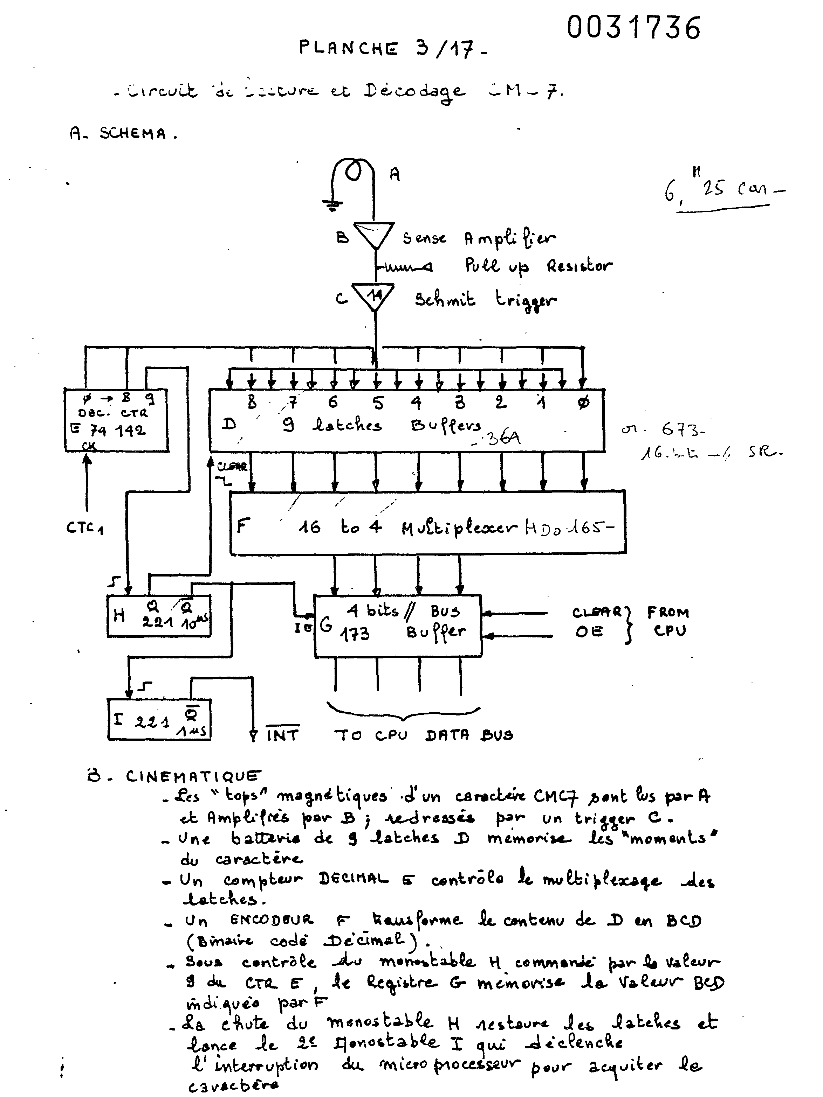

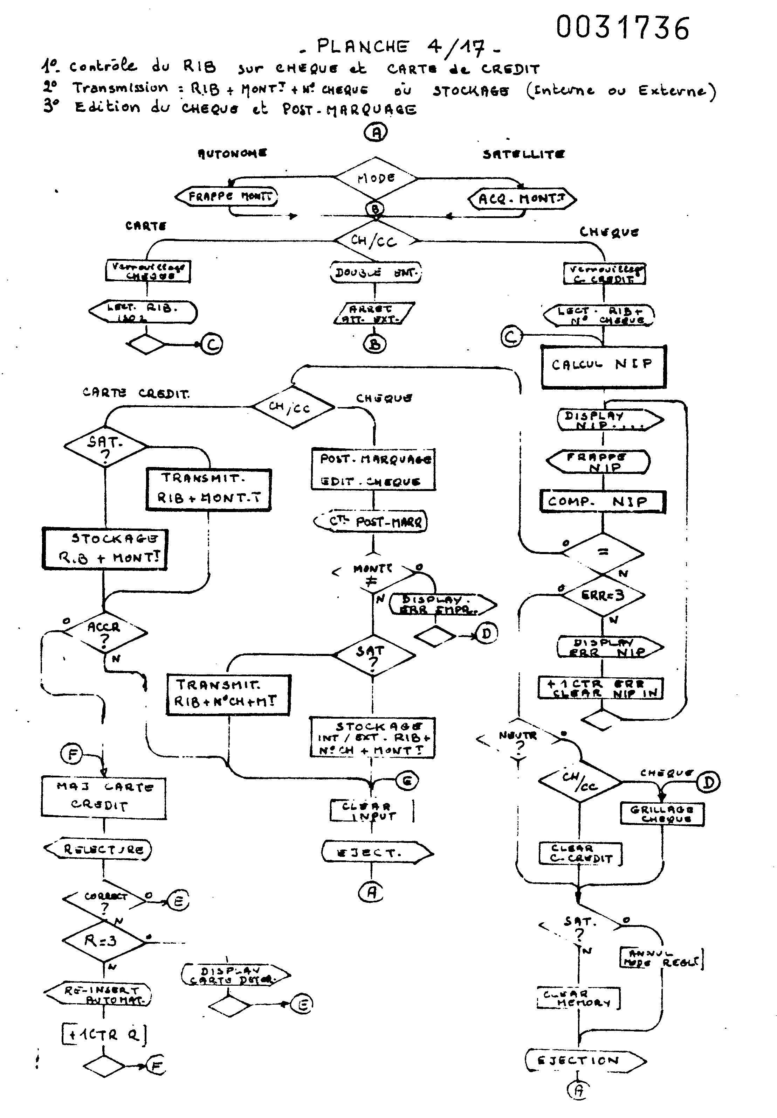

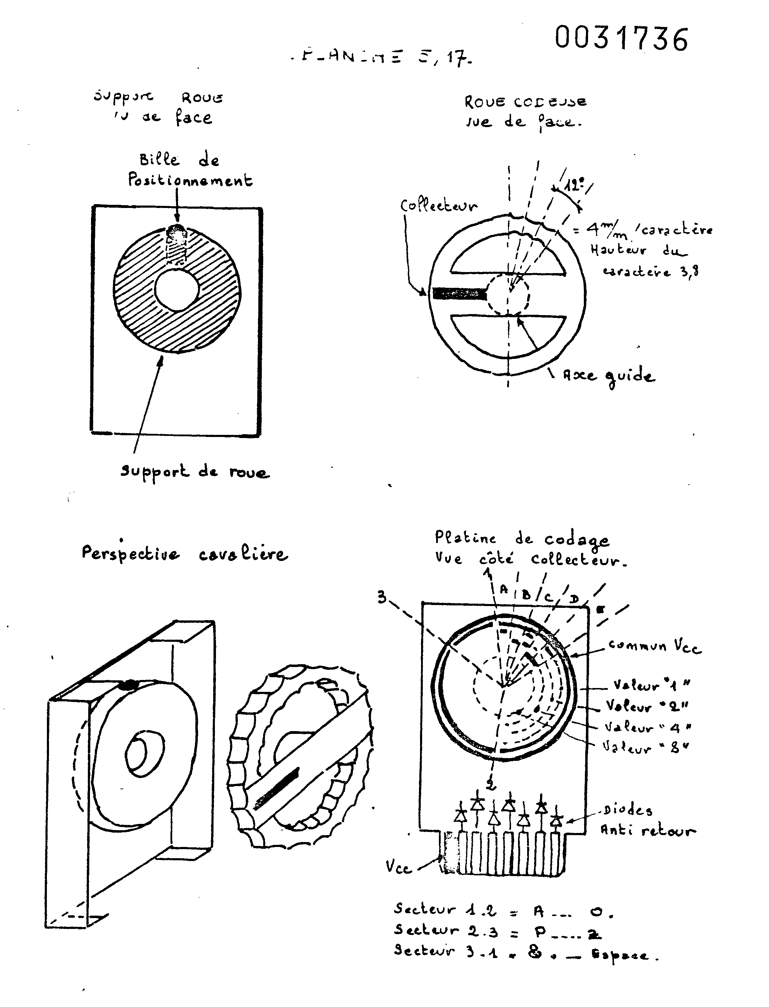

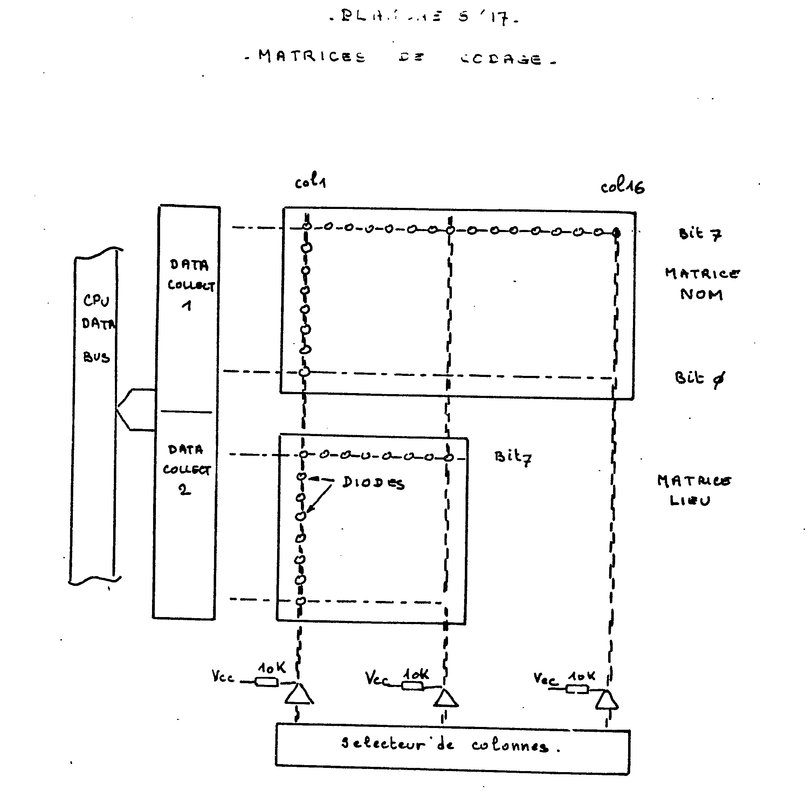

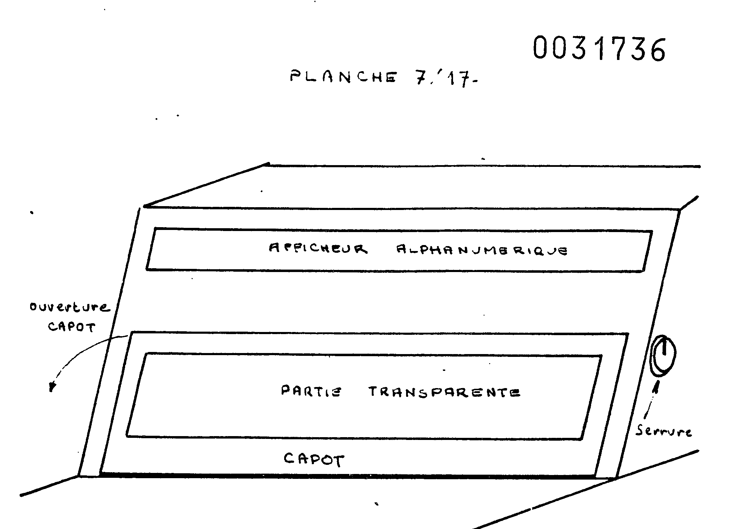

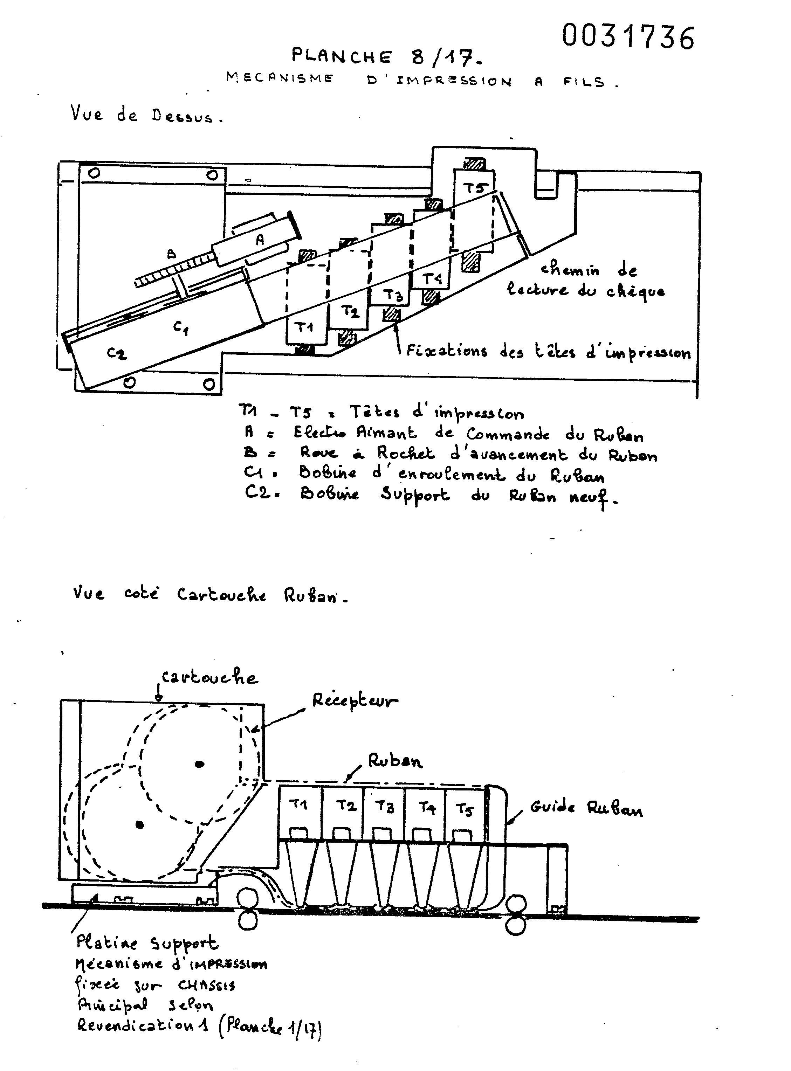

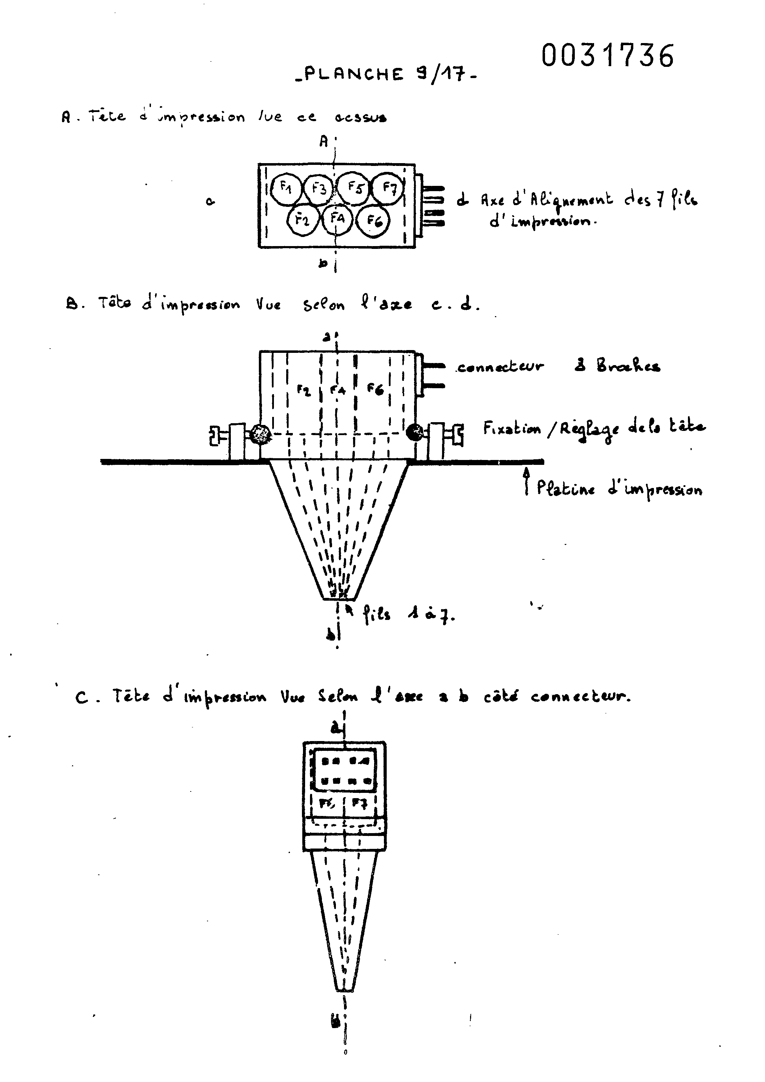

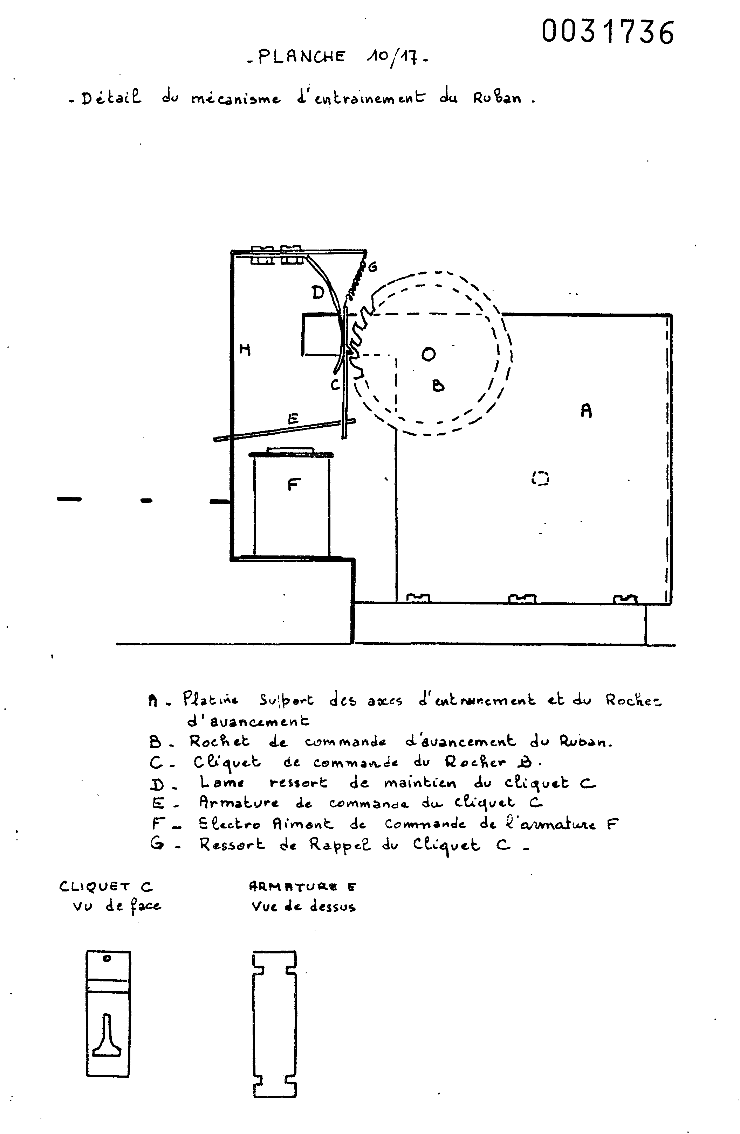

Caractérisé par un ensemble de cellules photo-électroniques et de circuits intégrés (planche 2/I7) qui commandent les mécanismes de l'élément I sous contrôle du micro-processeur. L'élément .2 commande :

I) la mise en marche et l'arrêt automatique du moteur en fonction du type de document détecté en entrée,

2) sous contrôle du micro-processeur, l'inversion du sens de marche du moteur et la mise en marche arrière pour éjection du document,

3) l'arrêt automatique du moteur après l'éjection du document.

Elément 3.

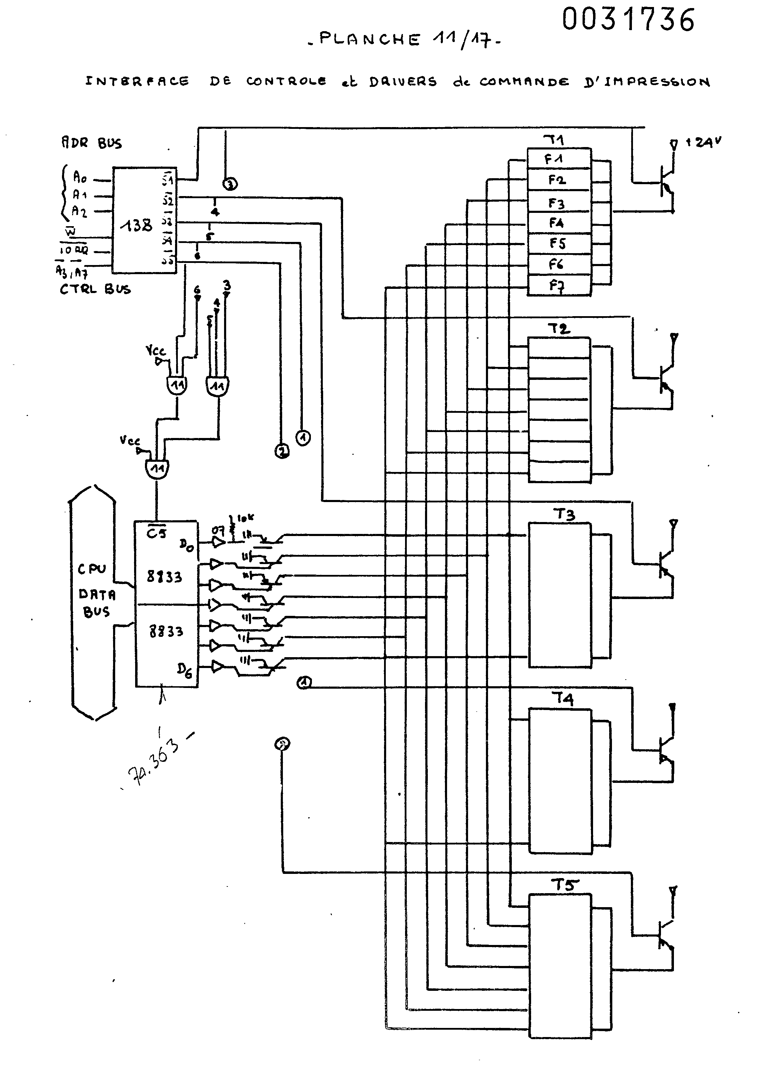

Caractérisé par une tête de lecture/écriture magnétique qui, associée à des circuits intégrés, sous contrôle d'une horloge permet (planche 3/I7) :

I) le décodage des caractères CMC7 (d'où la reconnaissance du RIB),

2) la liaison (interface) avec le micro-processeur qui gère la procédure de contrôle préalable du RIB,

3) le contrôle du post marquage du chèque lors de l'éjection de celui-ci (voir revendication IO § 2).

Elément 4.

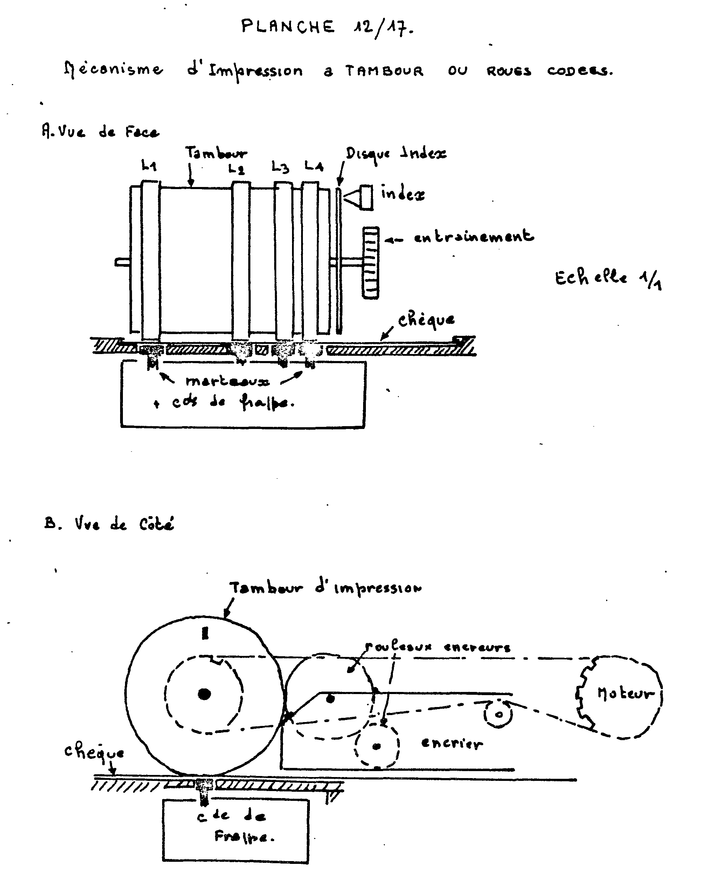

Caractérisé par un algorithme inédit (planche 4/I7) qui définit :

I) le processus des opérations de contrôle,

2) le mode de calcul du nombre clé du RIB,

3) la procédure de saisie au clavier du NIP (Numéro d'Identification Personnel),

4) la séquence de vraisemblance du NIP,

5) l'acceptation du document ou son rejet.

Le programme résultant de cet algorithme fera ultérieurement l'objet d'un additif à cette revendication.

Revendication 2.

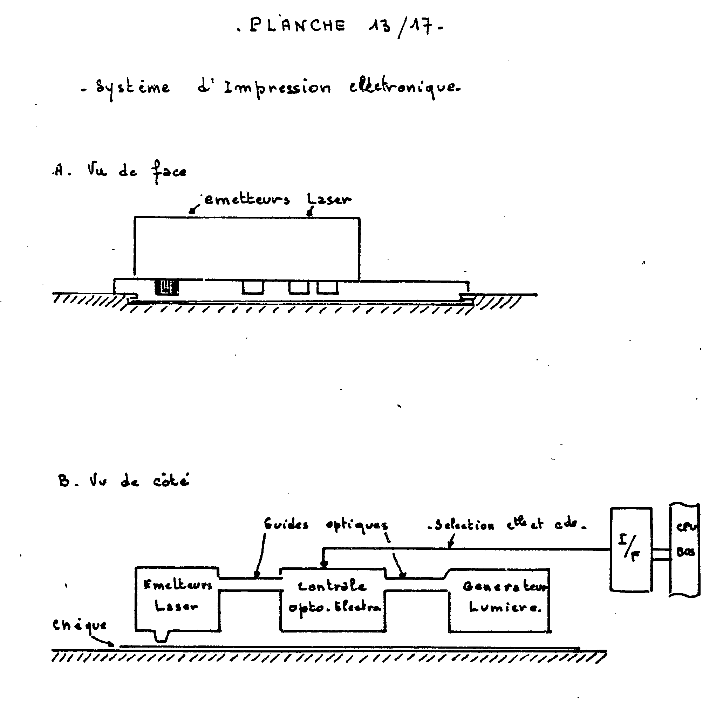

Caractérisée par un ensemble de ROUES CODEUSES ALPHA-NUMERIQUES (planche 5/I7) constituées d'une roue gravée comportant :

- les 26 lettres de l'alphabet,

- I position nulle (espace)

- 3 caractères spéciaux & ("et" commercial)

. (point)

- (tiret)

Un secteur conducteur assorti aux déplacements de la roue codée est en contact, par frottement, avec une platine de codification qui génère, selon la position de la roue, le code
USASCII du caractère.

Chaque "ligne" de sortie, correspondant à I bit ASCII est contrôlée par une DIODE faisant office d'ANTI-RETOUR électrique
permettant ainsi le MULTIPLEXAGE du nombre de roues codeuses
désirées.

Le secteur "conducteur" est relié, par frottement, à un collecteur "commun" qui doit être relié à la source logiquè V.C.C
(+ 5 volts). Une variante VDD (+ 12 volts) pourra être réalisée Ces roues codeuses, qui pourront être utilisées dans de multiples applications industrielles et commerciales autres que le
système DISTRIB, seront, précisément dans le système DISTRIB,
au nombre de 24 réparties en deux modules de :

I/ I6 roues destinées à la personnalisation du NOM du BENEFICIAIRE du chèque

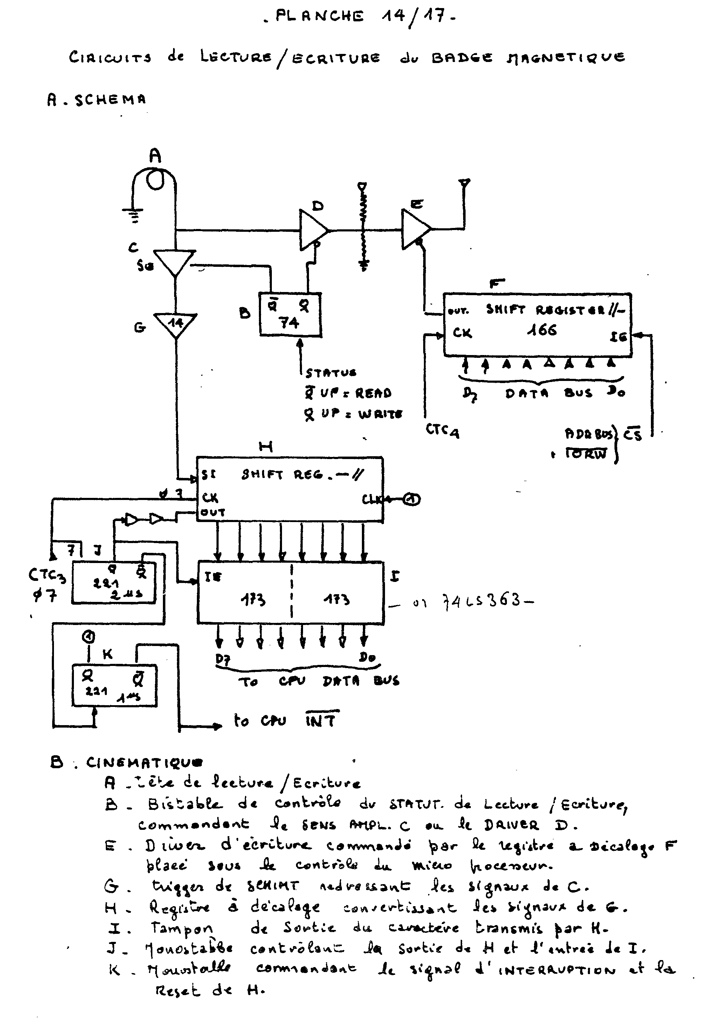

2/ 8 roues destinées à la personnalisation du LIEU d'émission
du chèque, assortie à cette revendication relative à la PERSONNALISATION des chèques, une solution MOINS pratique constituée de MATRICES de CODAGE (planche 6/I7) pourra être utilisée pour certaines versions "économiques" lorsque le MEME bénéficiaire serait utilisateur d'un nombre IMPORTANT d'APPAREILS DISTRIB.

Revendication 3.

Caractérisée par un capot protecteur fermant à clé (planche
7/I7) interdisant la MODIFICATION du nom du bénéficiaire et du
lieu d'émission, par des tiers (clients, caissières, etc...)

Selon le souhait de l'utilisateur, la serrure sera :

- de sûreté,

- à pompe

- à combinaison.

Le capot protecteur sera, soit en matière transparente incassable, soit pourvu d'une "fenêtre" de visualisation qui permettra au client de VISUALISER les NOMS du BENEFICIAIRE et
LIEU d'émission AVANT l'introduction du chèque dans l'appareil
DISTRIB.

Revendication 4.

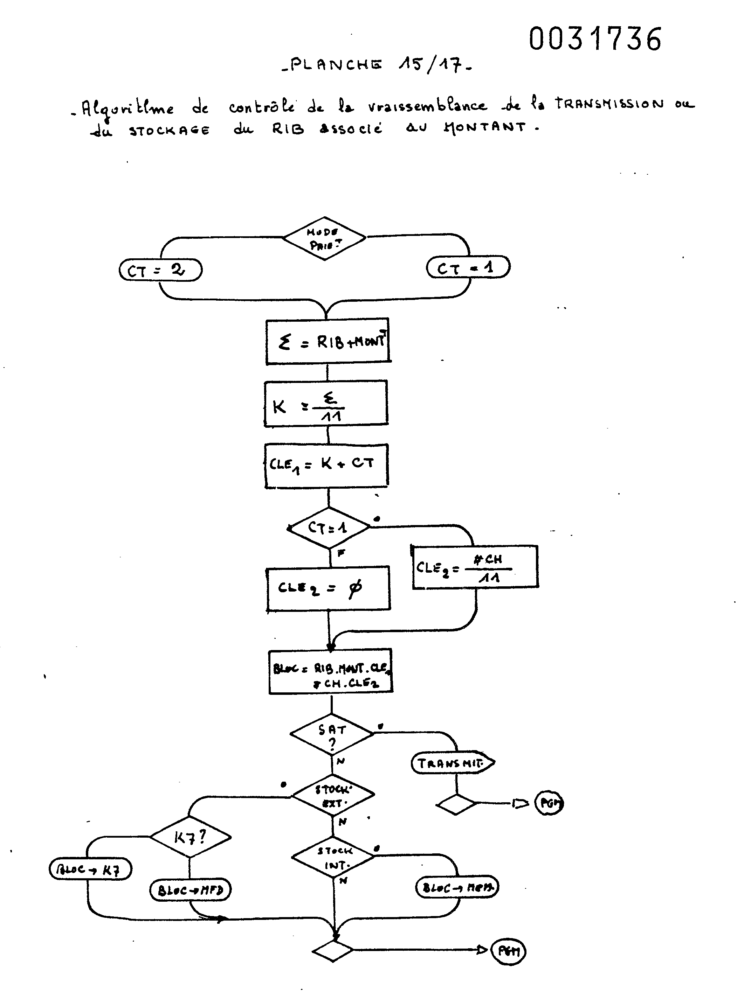

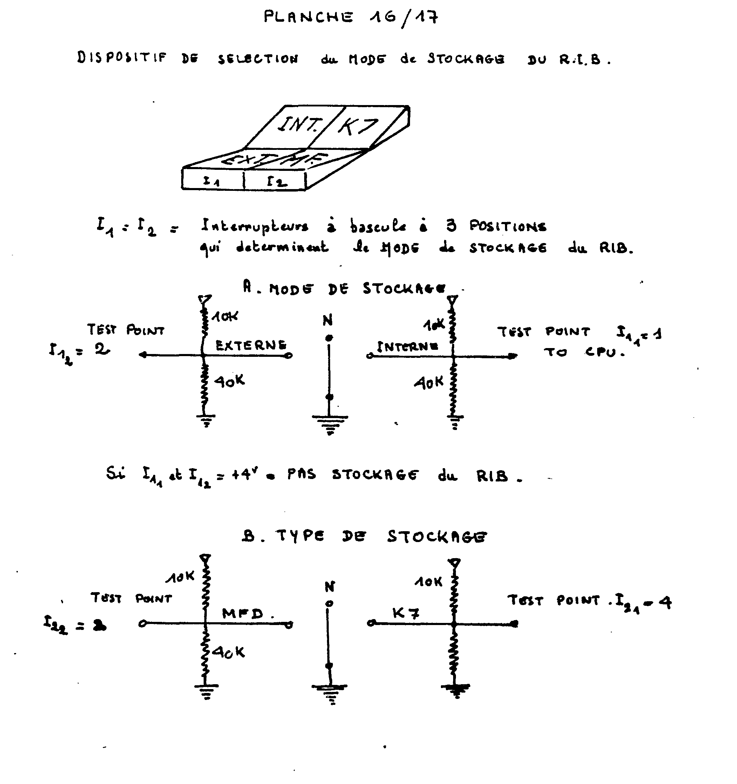

Caractérisée par un mécanisme d'impression à fils (planche 8/I7), utilisant un ruban encreur porteur d'une encre indélébile.

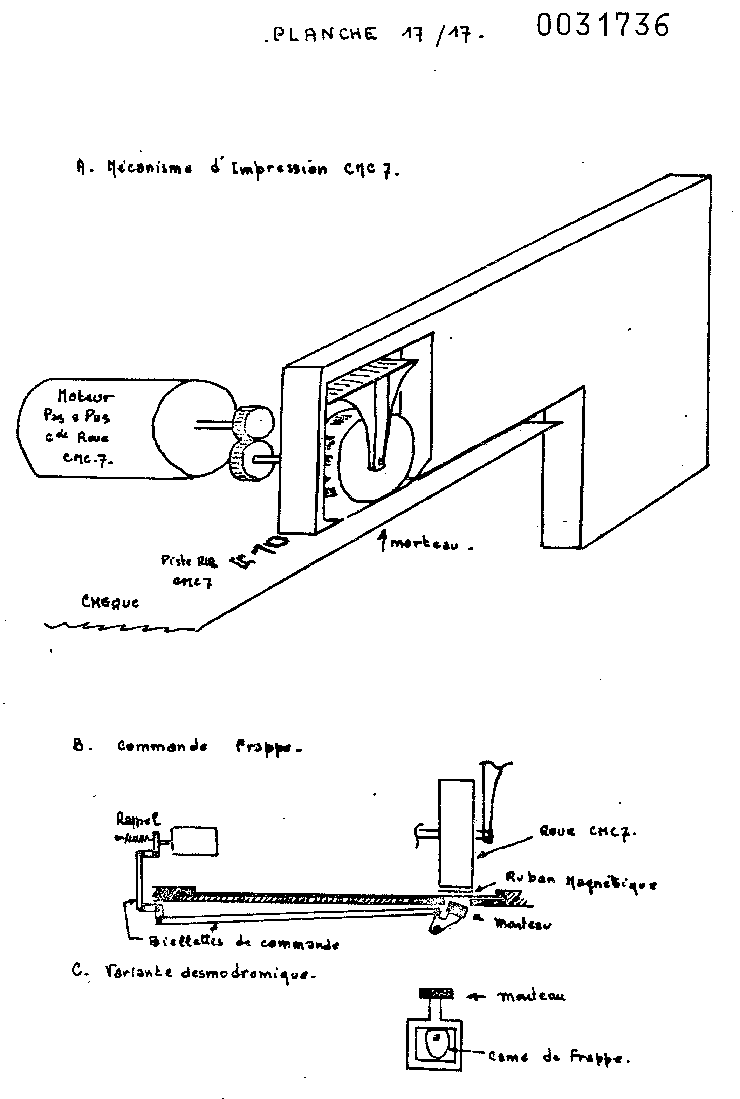

Le mécanisme d'impression sera composé d'un ensemble de 5 têtes d'impression spécifiques (planche 9/I7) réalisées en matière plastique dure moulée ou en alliage d'aluminium (ZAMAC) et supportées par une platine, supportant également le mécanisme de renversement du ruban (planche IO/I7).

Les têtes d'impression seront sous le contrôle DIRECT du micro processeur (planche II/I7).

Des variantes de mécanisme d'impression NON STATIQUES utilisant un système de ruban analogue pourront être réalisées à partir de roues codées ou de secteurs utilisant le principe de la "frappe à la volée".

Revendication 5.

Caractérisée par un mécanisme d'impression à roues codées utilisant le principe du transfert OFFSET (planche I2/I7). Hormis ce principe particulier du dépôt de l'encre indélébile, le résultat est IDENTIQUE aux principes énoncés au titre de la revendication 4.

Revendication 6.

Caractérisée par un dispositif électronique utilisant le principe LASER (planche I3/I7) détruisant en surface les parties imprimées du chèque.

Revendication 7.

Caractérisée par les circuits électroniques qui, liés à l'algorithme, objet de la revendication I, élément 4, permettent un contrôle automatique de vraisemblance du RIB et de la véracité du porteur de la carte de crédit (planche I4/I7).

Revendication 8.

Caractérisée par les circuits électroniques qui, sous le contrôle d'un micro-processeur assurent le transfert du RIB, CONTROLE et VALIDE vers un système de :

- télécommunications,
- stockage externe,
- terminal ou caisse enregistreuse.

Ce RIB étant ETROITEMENT ASSOCIE au MONTANT de la transaction, un algorithme de contrôle étant proposé (planche I5/I7) aux

utilisateurs exploitant les résultats du système DISTRIB. Cet algorithme (planche I5/I7) facilitera les contrôles AUTO-MATIQUES de VRAISEMBLANCE avant traitement (encaissement/ compensation).

Revendication 9.

Caractérisée par un circuit électronique (planche I6/I7) permettant, selon le choix de l'utilisateur :

- un stockage interne (surmémoires RAM protégées) des transactions assorties des RIB correspondants,

- un stockage externe (sur mini cassette ou mini disque souple) des transactions assorties des RIB correspondants.

Revendication 10.

Caractérisée par un dispositif électro-mécanique (planche I7/I7) asservi par un micro-processeur programmable qui exécute :

I/ le post marquage magnétique des chèques,

2/ le post contrôle du post marquage en relation avec la revendication I, élement 3.

0031736

PLANCHE 1/17.

echelle $\frac{1}{2}$

Fixation Platine
Carte + moteur sur
chassis principal.

Rouleaux
moteur B page
entrainement
Pas à Pas

chemin du CHEQUE

Rouleaux d'entrainement →

mécanisme d'obturation

1°. Chassis et mécanismes d'entrainement vus de dessus (ci-dessus).

2°. Details des rouleaux d'entrainement A et B.

Vue F

Vue G_F

Ecrous
prisonniers du chassis
Support d'axe des
rouleaux d'entrainement

Pieds de Posit!
Solidaires du Support

entretoises

3e chassis et mécanismes d'entrainement vus de côté.

A. COMMANDES MARCHE AV du Moteur PAS à PAS
circuits de controle et d'insertion des documents.

E.A Verrouillage chèque

11◄ DIODE STOP.FWD

Set MOTOR ON FWD.

Set UP S.PGM CARTE CREDIT.

FIN D'EJECTION (carte)

E.A. Verrouillage carte Credit

11◄ DIODE STOP FWD

Set MOTOR ON FWD

Set UP S.PGM CHEQUE

FIN D'EJECTION (chèque)

1- Circuit de contrôle et de commande du moteur avec carte.
2-   "   "   "   "   "   "   "   "   " chèque.
3- Circuits de protection du moteur en cas d'insertion simultanée carte + chèque.
4- Neutralisation des circuits d'entrée évitant une DOUBLE INSERTION

B. COMMANDES D'EJECTION DU MOTEUR.

STOP CC

STOP MOTOR FWD

STOP CH

STOP MOTOR FWD

RC1
221
1Sec

RC2
221
100MS

FIN D'EJECTION

RESET

5.1 Bistables d'arrêt du moteur (1 par piste)
Contrôlent également les détecteurs d'éjection
5.2 Monostables assurent le retour de Reset du circuit après retrait du document

PLANCHE 3/17.

- Circuit de lecture et Décodage CM-7.

A. SCHEMA.

6, "25 car-

A

B Sense Amplifier

Pull up Resistor

C 14 Schmit trigger

∅ → 8 9
Dec. CTR
E 74 142
CK

CTC₁

D    9 latches   Buffers   -364

or. 673-
16.55 — 1 SR.

F    16 to 4 Multiplexer HDo 165-

H  Q /Q
221 10ᵘˢ

I0 G  4 bits // BUS
173    Buffer

CLEAR) FROM
OE } CPU

I 221 Q̄
1ᵘˢ

INT    TO CPU DATA BUS

B. CINEMATIQUE
- Les "tops" magnétiques d'un caractère CMC7 sont lus par A
et Amplifiés par B ; redressés par un trigger C.
- Une batterie de 9 latches D mémorise les "moments"
du caractère
- Un compteur DECIMAL E contrôle le multiplexage des
latches.
- Un ENCODEUR F transforme le contenu de D en BCD
(Binaire codé Décimal).
- Sous contrôle du monostable H commandé par la valeur
9 du CTR E, le Registre G mémorise la Valeur BCD
indiquée par F
- La chute du monostable H restaure les latches et
lance le 2ᵉ monostable I qui déclenche
l'interruption du microprocesseur pour acquiter le
caractère

0031736

- PLANCHE 4/17 -

1°. contrôle du RIB sur CHEQUE et CARTE de CREDIT
2° Transmission : RIB + MONT.T + N° CHEQUE ou STOCKAGE (Interne ou Externe)
3° Edition du CHEQUE et POST-MARQUAGE

PLANCHE E, 17.

0031736

Support ROUE vu de face

Bille de Positionnement

Support de roue

ROUE CODEUSE vue de face.

Collecteur

12°

= 4 $^{m}/_{m}$ /caractère
Hauteur du caractère 3,8

Axe guide

Perspective cavalière

Platine de codage
Vue côté collecteur.

commun Vcc

Valeur "1"
Valeur "2"
Valeur "4"
Valeur "8"

Diodes
Anti retour

Vcc

Secteur 1.2 = A ... O.
Secteur 2.3 = P .... Z
Secteur 3.1 = & . — Espace.

0031736

- MATRICES DE CODAGE.

col1      col16

CPU DATA BUS

DATA COLLECT 1

DATA COLLECT 2

Bit 7

MATRICE NOM

Bit ∅

Bit 7

DIODES

MATRICE LIEU

Vcc 10K    Vcc 10K    Vcc 10K

Selecteur de colonnes.

PLANCHE 7.'17-

0031736

AFFICHEUR  ALPHANUMERIQUE

ouverture
CAPOT

PARTIE  TRANSPARENTE

Serrure

CAPOT

PLANCHE 8/17.

0031736

MECANISME D'IMPRESSION A FILS.

Vue de Dessus.

chemin de
lecture du chèque

Fixations des têtes d'impression

T1 - T5 : Têtes d'impression
A = Electro Aimant de Commande du Ruban
B = Roue à Rochet d'avancement du Ruban
C1 = Bobine d'enroulement du Ruban
C2 = Bobine Support du Ruban neuf.

Vue coté Cartouche Ruban.

Cartouche

Récepteur

Ruban

Guide Ruban

Platine Support
Mécanisme d'IMPRESSION
fixeé sur CHASSIS
Principal selon
Revendication 1 (Planche 1/17)

ECHELLE 1/2.

_PLANCHE 9/17_

0031736

A. Tête d'impression Vue ce dessus

d. Axe d'Alignement des 7 fils d'impression.

B. Tête d'impression Vue selon l'axe c.d.

connecteur 2 Broches

Fixation / Réglage de la tête

Platine d'impression

fils 1 à 7.

C. Tête d'impression Vue selon l'axe a b côté connecteur.

-Détail du mécanisme d'entrainement du Ruban.

A - Platine Support des axes d'entrainement et du Rochet d'avancement
B - Rochet de commande d'avancement du Ruban.
C - Cliquet de commande du Rocher B.
D - Lame ressort de maintien du cliquet C
E - Armature de commande du cliquet C
F - Electro Aimant de commande de l'armature F
G - Ressort de Rappel du Cliquet C -

CLIQUET C
vu de face

ARMATURE E
Vue de dessus

- PLANCHE 11/17 -

0031736

INTERFACE DE CONTROLE et DRIVERS de COMMANDE D'IMPRESSION

0031736

PLANCHE 12/17.

Mécanisme d'Impression à TAMBOUR OU ROUES CODEES.

A. Vue de Face

L1, Tambour, L2, L3, L4, Disque Index, index, entrainement, chèque

Echelle 1/1

marteaux + cdt de frappe.

B. Vue de Côté

Tambour d'impression, rouleaux encreurs, Moteur, encrier, chèque, c de de Frappe.

. PLANCHE 13/17.

- Système d'Impression electronique.

A. Vu de face

emetteurs Laser

B. Vu de côté

Guides optiques          . Selection ett et cde.

Emetteurs Laser

Contrôle opto. Electro

Generateur Lumiere.

I/F

CPU Bus

Chèque

. PLANCHE 14/17 .

CIRCUITS de LECTURE/ECRITURE du BADGE MAGNETIQUE

A . SCHEMA

B . CINEMATIQUE

A . Tête de lecture / Ecriture

B . Bistable de contrôle du STATUT de Lecture / Ecriture, commandant le SENS AMPL. C ou le DRIVER D.

E . Driver d'écriture commandé par le registre à décalage F placé sous le contrôle du micro processeur.

G . trigger de SCHIMT redressant les signaux de C.

H . Registre à décalage convertissant les signaux de G.

I . Tampon de Sortie du caractère transmis par H.

J . Monostable contrôlant la sortie de H et l'entrée de I.

K . Monostable commandant le signal d'INTERRUPTION et la Reset de H.

0031736

_PLANCHE 15/17_

- Algoritlme de contrôle de la vraissemblance de la TRANSMISSION ou du STOCKAGE du RIB associé au MONTANT.

0031736

PLANCHE 16/17

DISPOSITIF DE SELECTION du MODE de STOCKAGE DU R.I.B.

$I_1 = I_2 =$ Interrupteurs à bascule à 3 POSITIONS
qui déterminent le MODE de STOCKAGE du RIB.

## A. MODE DE STOCKAGE

Si $I_{A_1}$ et $I_{A_2} = +4^v$ = PAS STOCKAGE du RIB.

## B. TYPE DE STOCKAGE

A. Mécanisme d'Impression CMC 7.

Moteur Pas a Pas c de Roue CMC.7.

Piste RIB CMC7

CHEQUE

↑ marteau .

B. Commande Frappe.

Rappel

Roue CMC7.

Ruban Magnétique

marteau

Biellettes de commande

C. Variante desmodromique.

marteau

Came de Frappe.

**Office européen des brevets**

**RAPPORT DE RECHERCHE EUROPEENNE**

003~1736

EP 80 40 1585

| Catégorie | Citation du document avec indication, en cas de besoin, des parties pertinentes | Revendication concernée | CLASSEMENT DE LA DEMANDE (Int. Cl. 3) |
|---|---|---|---|
| | US - A - 3 985 998 (P.A. CRAFTON)<br>* Abrégé; figures; colonne 1, ligne 55 à colonne 2, ligne 23; colonne 2, ligne 50 à colonne 3, ligne 39; colonne 12, ligne 10 à colonne 13, ligne 4 *<br><br>-- | 1,7,10 | G 07 F 7/10<br>G 06 F 15/30 |
| | US - A - 4 109 238 (R.V. CREEKMORE)<br>* Abrégé; figures; colonne 2, ligne 55 à colonne 6, ligne 36; colonne 9, ligne 53 à colonne 12, ligne 43 *<br><br>-- | 1-3, 7-10 | |
| | FR - A - 2 246 913 (GRETAG)<br>* Revendications; figures; page 1, ligne 1 à page 3, ligne 9 *<br><br>-- | 1,7 | **DOMAINES TECHNIQUES RECHERCHES (Int. Cl. 3)**<br><br>G 07 F 7/00<br>7/02<br>7/08<br>7/10<br>G 06 F 15/30<br>G 07 D 1/00<br>G 07 C 11/00 |
| | FR - A - 2 407 518 (INTERNATIONAL STANDARD ELECTRIC)<br>* Revendications; figures; page 5, ligne 1 à page 6, ligne 7 *<br><br>-- | 1,7,8 | |
| A | FR - A - 2 133 941 (OSTERTAG WERKE)<br>* Revendications; figures *<br><br>-- | 1,7,10 | **CATEGORIE DES DOCUMENTS CITES** |
| A | US - A - 4 053 735 (J.N. FOUDOS)<br>* Abrégé; figures; colonne 2, ligne 30 à colonne 5, ligne 9 *<br><br>-- | 1-3, 7-10 | X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| A | GB - A - 2 004 103 (OMRON TATEISI | 1 ./. | &: membre de la même famille, document correspondant |

X Le présent rapport de recherche a été établi pour toutes les revendications

| Lieu de la recherche | Date d'achèvement de la recherche | Examinateur |
|---|---|---|
| La Haye | 09-02-1981 | DAVID |

OEB Form 1503.1 06.78

| Catégorie | Citation du document avec indication, en cas de besoin, des parties pertinentes | Revendication concernée |
|---|---|---|
| | ELECTRONICS) | |
| | * Abrégé; figures; page 1, lignes 80-128; revendications * | |
| | -- | |
| A | US - A - 3 937 925 (W.A. BOOTHROYD) | 1 |
| | * Abrégé; figures * | |
| | ---- | |

**DOCUMENTS CONSIDERES COMME PERTINENTS**

**CLASSEMENT DE LA DEMANDE (Int. Cl. ³)**

**DOMAINES TECHNIQUES RECHERCHES (Int. Cl. ³)**